(19) Europäisches Patentamt

European Patent Office

Office européen des brevets

(11) **EP 0 828 144 B1**

(12) **EUROPÄISCHE PATENTSCHRIFT**

(45) Veröffentlichungstag und Bekanntmachung des Hinweises auf die Patenterteilung:
**02.06.2004   Patentblatt 2004/23**

(51) Int Cl.$^7$: **G01J 3/46**

(21) Anmeldenummer: **97115408.3**

(22) Anmeldetag: **05.09.1997**

(54) **Verfahren zur Anpassung einer Farbrezeptur**

Method for matching a colour mixture

Procédé pour reproduire un mélange de couleurs

(84) Benannte Vertragsstaaten:
**AT BE CH DE DK ES FR GB GR IE IT LI NL PT SE**

(30) Priorität: **10.09.1996   DE 19636774**

(43) Veröffentlichungstag der Anmeldung:
**11.03.1998   Patentblatt 1998/11**

(73) Patentinhaber: **E.I. DU PONT DE NEMOURS AND COMPANY**
**Wilmington, Delaware 19898 (US)**

(72) Erfinder:
• **Kettler, Wilhelm, Dr.**
  **42105 Wuppertal (DE)**
• **Kolb, Matthias, Dr.**
  **42111 Wuppertal (DE)**
• **Tacke, Albert**
  **42109 Wuppertal (DE)**

(74) Vertreter: **Gille Hrabal Struck Neidlein Prop Roos Patentanwälte**
**Brucknerstrasse 20**
**40593 Düsseldorf (DE)**

(56) Entgegenhaltungen:
**EP-A- 0 319 375          US-A- 3 601 589**

• **SPEHL J ET AL: "APPLICATION OF BACKPROPAGATION NETS FOR COLOR RECIPE PREDICTION AS A NONLINEAR APPROXIMATION PROBLEM" INTERNATIONAL CONFERENCE ON NEURAL NETWORKS/ WORLD CONGRESS ON COMPUTATIONAL INTELLIGENCE, ORLANDO, JUNE 27 - 29, 1994, Bd. 5, 27.Juni 1994, INSTITUTE OF ELECTRICAL AND ELECTRONICS ENGINEERS, Seiten 3336-3341, XP000532724**

**Beschreibung**

Die Erfindung betrifft ein Verfahren zur Anpassung eines bekannten Referenz-Farbrezeptes an eine davon abweichende Farbtonvorlage auf dem Gebiet der farb- und/oder effektgebenden Oberflächenbeschichtung, welches insbesondere Anwendung findet in der Reparaturlackierung von Fahrzeugen und Fahrzeugteilen sowie bei der Korrektur von Produktionsansätzen in der Lackfertigung.

In Lackierwerkstätten und in der Lackindustrie ist es üblich und notwendig, daß entsprechend einer Farbtonvorlage ein bestimmter Farbton mit dem zu applizierenden Lack nachgestellt werden muß. Bei der Farbtonvorlage kann es sich dabei beispielsweise um eine Fahrzeugkarosserie handeln, an der ein Lackschaden ausgebessert werden soll, oder um einen in der Produktion mit einem bestimmten Farbton zu fertigenden Lack. In der Lackierwerkstatt steht dem Lackierer zur Reparaturlackierung in der Regel eine Mischbank mit einer Vielzahl von Mischlacken bzw. Farbpasten zur Verfügung, aus denen er mit Hilfe von Farbrezepten bzw. Mischformeln den Originalfarbton des Fahrzeuges erstellen kann. Auf Grund verschiedener äußerer Einflüsse weicht jedoch oftmals das Fahrzeug bzw. Karosserieteil in der Farbwirkung vom Originalfarbton ab. Der Lackierer hat nun die Aufgabe, mit möglichst wenigen Tönschritten den Originalfarbton, den er beispielsweise mittels einer Mischformel erstellt, an den Farbton des zu reparierenden Fahrzeuges oder Karosserieteils anzugleichen. Die Angleichung geschieht durch geringfügige, aber kritische Variation der in der Mischformel angegebenen Pigmentmengen. Dieser Tönvorgang mit visuellem Farbangleich kann traditionell nur von gut ausgebildetem und trainiertem Fachpersonal ausgeführt werden und ist heute in vielen Lackierwerkstätten noch die übliche Arbeitsweise.

Der visuell vorgenommene Tönvorgang ist allerdings in den letzten Jahren in zunehmendem Maße durch Geräte zur instrumentellen Charakterisierung von Lacken oder Pigmentmischungen unterstützt worden. Neben den sogenannten Colorimetern werden heute vorzugsweise Spektralphotometer eingesetzt, mit denen die Reflexionseigenschaften lackierter Oberflächen im sichtbaren Spektralbereich meßtechnisch für einen vorgegebenen Beleuchtungs- und Beobachtungswinkel erfaßt werden können.

Aus der Faltung des gemessenen Reflexionsfaktors mit einer Lichtart und jeweils einer der drei Normspektralwertfunktionen können alle Komponenten des zugehörigen Vektors der Normfarbwerte gewonnen werden. Für effektpigmentfreie Lackierungen ist der Reflexionsfaktor, abgesehen vom Glanzwinkel, und damit auch der zugehörige Vektor im Farbraum unabhängig von der Wahl des Beleuchtungs- und Beobachtungswinkels. Für diese sogenannten Unilacke reicht damit eine Meßgeometrie zur vollständigen Charakterisierung ihrer Reflexionseigenschaften aus.

Die US-3,601,589 A beschreibt ein Computer-unterstütztes Verfahren zur Formulierung von unifarbigen chemischen Überzügen, die frei von Effektpigmenten sind. Dabei werden mit einem Spektralphotometer die Reflexionsspektren von Überzügen mit verschiedenen Pigmenten bzw. Pigmentgemischen ermittelt. In einer Datenbank sind optische Materialparameter der jeweiligen Pigmente bzw. Pigmentgemische gespeichert, mit deren Hilfe Farbrezepturen nach dem Kubeika-Munk-Modell winkelunabhängig berechnet werden können.

Viele Lacke enthalten jedoch stark anisotrop streuende plättchenförmige Effektgeber, wie beispielsweise Aluminium-, Interferenz-, Flüssigkristallpigmente, holographische Pigmente oder mikronisiertes Titandioxid, welche dem Überzug besondere ästhetische Changiereffekte verleihen. Der wahrnehmbare Farbeindruck einer derartigen Lackierung variiert mit dem Beobachtungswinkel (Helligkeits- und/oder Farbflop). Da der Reflexionsfaktor dieser Lacke mit dem Beleuchtungs- oder Beobachtungswinkel variiert, reicht eine Meßgeometrie zu ihrer instrumentellen Charakterisierung nicht mehr aus. Für diesen Anwendungsfall hat sich der Einsatz von Goniospektralphotometern durchgesetzt, mit denen unter mehreren verschiedenen Meßgeometrien eine der jeweiligen Applikation angepaßte hinreichend große Reflexionsfläche winkel- und wellenlängenabhängig vermessen werden kann. Die gewonnenen Informationen können dann zur instrumentellen Unterstützung bei der Anpassung von Effektfarbtönen an eine Referenzfarbtonvorlage herangezogen werden.

Dabei wird so vorgegangen, daß zunächst die Auswirkungen von Konzentrationsänderungen der einzelnen Pigmente auf die Reflexionsfaktoren oder daraus abgeleiteter farbmetrischer Maßzahlen bestimmt werden und an Hand dieser Informationen dann berechnet wird, wie die Pigmentmengen variiert werden müssen, um sich dem gewünschten Farbton anzugleichen. Der Nachteil dieser Korrekturmethoden besteht darin, daß die Auswirkungen von Konzentrationsänderungen der einzelnen Pigmente auf die Reflexionsfaktoren experimentell für jedes Rezept bestimmt werden müssen. Das führt zu einem großen zeitintensiven Tönaufwand, was sich beispielsweise in einer Lackierwerkstatt negativ auf den Fahrzeugdurchlauf pro Zeiteinheit auswirkt und die Effektivität erheblich reduziert. In der Lackproduktion ergeben sich mit dieser Methode bei der Korrektur von Produktionsansätzen signifikant verlängerte Produktionszeiten.

Aufgabe der vorliegenden Erfindung war es daher, ein Verfahren zur Korrektur bzw. Anpassung von Referenz-Farbrezepten an eine bestimmte Farbtonvorlage, beispielsweise ein auszubesserndes Karosserieteil oder einen zu fertigenden Naßlack mit fest vorgegebenem Farbton zur Verfugung zu stellen, welches den Tönaufwand minimiert und ohne großen Zeitaufwand eine optisch akzeptable Anpassung eines Farbrezeptes an einen auszubessernden bzw. zu korrigierenden Farbton ermöglicht.

Die Aufgabe wird gelöst durch ein Korrekturverfahren, bei dem im Vorfeld des Korrekturvorganges auf Basis aus einer Eichstaffel ermittelter optischer Materialparameter für ein vorgegebenes Rezept die koloristische Wirkungsmatrix rechnerisch ermittelt wird, die den Konzentrationsgang des Farbortes bei den meßtechnisch erfaßten Winkeln im Farbenraum beschreibt.

Das erfindungsgemäße Korrekturverfahren ist dadurch gekennzeichnet, daß

1) in einem ersten Schritt die Reflexionsfläche eines nachzustellenden Farbtons einer gefärbten Oberflächenbeschichtung mit einem Goniospektralphotometer meßtechnisch über den sichtbaren Spektralbereich unter Variation des Meßwinkels erfaßt wird,

2) aus den gemessenen Reflexionsfaktoren bzw. Strahldichtefaktoren die zugehörigen Normfarbwerte bzw. die daraus abgeleiteten Vektoren im CIELAB-Farbraum berechnet werden,

3) anschließend aus einer Rezeptdatenbank an Hand der Reflexionsspektren oder der daraus abgeleiteten farbmetrischen Maßzahlen diejenigen Rezepte bzw. Farbtöne identifiziert werden, welche in ihren Reflexionseigenschaften oder daraus abgeleiteten Eigenschaften der vermessenen Farbtonvorlage am ähnlichsten sind,

4) mit Hilfe einer im Vorfeld rechnerisch erstellten Wirkungsmatrix die meßtechnisch erfaßte winkelabhängige Farbdifferenz zwischen Sollfarbton (nachzustellender Farbton) und Istfarbton (Farbton entsprechend nächstliegendem Rezept aus Rezeptdatenbank) mittels eines Rechenalgorithmus zur Funktionsminimalisierung unter Berücksichtigung von Nebenbedingungen im Sinne der $L_2$-Norm minimiert und ein korrigiertes Rezept erstellt wird, wobei die Wirkungsmatrix erstellt wird, indem

a) mittels einer Eichstaffel die Reflexionsflächen für jedes den Rezepten aus der Rezeptdatenbank zugrundeliegendes Pigment bei mehreren Winkeln im geforderten Spektralbereich experimentell mit einem Goniospektralphotometer ermittelt werden,

b) die optischen Materialparameter für jedes den Rezepten aus der Rezeptdatenbank zugrundeliegende Pigment durch Anpassung der Strahlungstransportgleichung an die experimentell ermittelten Reflexionsflächen bestimmt werden und

c) die koloristische Wirkungsmatrix, welche die koloristische Wirkung im Reflexionsraum oder Farbraum winkelabhängig bei variierten Pigmentkonzentrationen beschreibt, für den gesamten Rezeptbestand der Rezeptdatenbank mit Hilfe der Strahlungstransportgleichung rechnerisch ermittelt und in der Rezeptdatenbank gespeichert wird,

Vorteilhaft werden entsprechend dem korrigierten Rezept als Referenzmuster ein Lack und/oder eine Oberflächenbeschichtung hergestellt und das erfindungsgemäße Verfahren wiederholt unter Verwendung des Referenzmusters als Istfarbton gegen den Sollfarbton.

Bei tolerierbaren Restfarbdifferenzen zwischen Farbtonvorlage und Referenzmuster kann das korrigierte Rezept zur Reparatur eingesetzt werden. Bei nicht tolerierbaren Restfarbdifferenzen wird das Referenzmuster (z.B. das beschichtete Blech) des letzten Korrekturschrittes goniospektralphotometrisch eingemessen und mit dem zugehörigen Rezept versehen. Das korrigierte Blech fungiert jetzt als Istrezept, dem die Wirkungsmatrix des Ausgangsrezeptes für den nächsten Korrekturschritt zugeordnet wird, der dann mit diesen neuen Daten durchgeführt wird.

Das erfindungsgemäße Verfahren wird vorteilhaft mehrfach wiederholt, wobei jeweils das Referenzmuster des vorhergehenden Verfahrensdurchlaufs als Istfarbton des folgenden Verfahrensdurchlaufs verwendet wird.

Die in 1) ermittelten Reflexionsflächen der Farbtonvorlage werden meßtechnisch mit einem Goniospektralphotometer erfaßt. Die Meßgeometrie ist dabei die gleiche, wie sie nachfolgend bei der Erstellung der Wirkungsmatrix (4a) näher beschrieben wird. Bei der zu vermessenden Farbtonvorlage kann es sich beispielsweise um ein Karosserieteil oder um einen flüssigen Lack handeln.

Anschließend werden aus den gemessenen Reflexionsfaktoren der Farbtonvorlage das Tripel der zugehörigen Normfarbwerte bzw. die daraus abgeleiteten Farbwerte im CIELAB-Farbraum berechnet.

Dem Korrektursystem liegt eine Rezeptdatenbank zugrunde, die für alle bekannten Farbtonvorlagen die dazu erstellten Rezepte oder Mischformeln enthält. Die Datenbank enthält außerdem für jeden Farbton die zugehörigen Reflexionsflächen bzw. die daraus berechneten farbmetrischen Maßzahlen. Ein Vergleich der an der nachzustellenden Farbtonvorlage gemessenen Reflexionsflächen bzw. der daraus abgeleiteten farbmetrischen Maßzahlen mit den in der Rezeptdatenbank gespeicherten Reflexionsflächen bzw. farbmetrischen Maßzahlen liefert eine Anzahl von n Rezepten (n ist z.B. 1 bis 5), die der Farbtonvorlage am nächsten kommen. Daraus kann dann unter Berücksichtigung weiterer Kriterien das eigentliche zu korrigierende Referenzrezept ausgewählt werden.

Der Informationsgehalt der im Vorfeld ermittelten und in der Datenbank gespeicherten Wirkungsmatrix des Referenzrezeptes wird nun dazu benutzt den Tönvorgang am Computer zu simulieren und das Ausgangsrezept in Richtung Farbtonvorlage hinzutönen.

Im folgenden soll näher erläutert werden, wie die im Vorfeld erstellte Wirkungsmatrix im einzelnen ermittelt wird.

Voraussetzung für die Erstellung der Wirkungsmatrix ist die Kenntnis der optischen Materialparameter aller ein Farbsystem (Lack) aufbauenden Mischlacke bzw. Pigmente.

Die optischen Materialparameter werden durch Anpassung der Strahlungstransportgleichung im Sinne der $L_2$-Norm an die für jedes Pigment experimentell bestimmten Reflexionsfaktoren oder Strahldichtefaktoren ermittelt.

Für den Fall von Uni-Pigmenten ist die bekannte Schuster/Kubelka/Munk-Näherung der Strahlungstransportgleichung völlig ausreichend. Im Rahmen dieser 2-Fluß-Näherung kann eine einfache Beziehung zwischen der Reflexion R einer opaken Lackschicht und den Streu- (S) und Absorptionseigenschaften (K) der in dieser Schicht enthaltenen Pigmente abgeleitet werden:

$$R = \alpha r_{ext} + \frac{(1\text{-}r_{ext})(1\text{-}r_{int})R_\infty}{1\text{-}r_{int}R_\infty}$$

mit

$$R_\infty = 1 + \frac{k}{s} - \sqrt{\left(1 + \frac{k}{s}\right)^2 - 1}$$

Der externe ($r_{ext}$) und interne ($r_{int}$) Reflexionskoeffizient korrigieren die an der Grenzfläche Luft/Lack stattfindenden Reflexionseffekte (Saunderson-Korrektur). Der Parameter a muß bei Glanzeinfluß auf Eins und bei Glanzausschluß auf Null gesetzt werden. Streu- und Absorptionskoeffizient setzen sich additiv aus den mit der jeweiligen Konzentration $c_i$ gewichteten Einzelbeträge der verschiedenen Pigmentspezies zusammen:

$$K = \sum_{i=1}^{N} c_i K_i \qquad\qquad S = \sum_{i=1}^{N} c_i S_i$$

Diese pigmentspezifischen, wellenlängenabhängigen Materialparameter müssen über eine Eichstaffel experimentell ermittelt werden.

Zur Beschreibung der Reflexionsindikatrix von Effektfarbtönen ist dieses 2-Fluß-Modell jedoch unzureichend. In diesem Fall muß zumindest die azimutunabhängige Form der Strahlungstransportgleichung

$$\mu \frac{dI(x,\mu)}{dx} = -(\kappa + \sigma) I(x,\mu) - \frac{\sigma}{2} \int_{-1}^{1} p(\mu,\mu') I(x,\mu') d\mu' + \frac{\sigma}{4\pi} I_o p(\mu,-\mu_o) e^{-(\kappa+\sigma)x/\mu_o}$$

oder ein allgemeingültigeres theoretisches Modell zur Beschreibung der Strahlungsdiffusion in pigmentierten Medien in hinreichender Näherung gelöst werden. Sie verknüpft die Intensität $I(x,\mu)$ der Strahlung in der geometrischen Tiefe x mit den optischen Materialparametern der Pigmente. Neben dem Absorptions- ($\kappa$) und dem Streukoeffizienten ($\sigma$) ist hier die Phasenfunktion $p(\mu,\mu')$ zu bestimmen, die die Winkelabhängigkeit der Lichtstreuung an den einzelnen Pigmentteilchen beschreibt, wobei $\mu=\cos\theta$ gilt ($\theta$=Streuwinkel). Auch die Phasenfunktion setzt sich additiv aus den mit der jeweiligen Pigmentkonzentration gewichteten Einzelbeiträge zusammen. Absorptionskoeffizient, Streukoeffizient und Phasenfunktion müssen wieder über eine Eichstaffel experimentell ermittelt werden. Sind diese Materialgrößen bekannt, kann das Reflexionsverhalten beliebig pigmentierter opaker Lacke mit Hilfe der Strahlungstransportgleichung quantitativ für jede Meßgeometrie berechnet werden.

Die optischen Materialparameter beschreiben die Eigenschaften der Pigmente, wie sie im jeweiligen Bindemittelsystem dispergiert sind. Sie sind wellenlängenabhängig und müssen für jede gewünschte Wellenlänge ermittelt werden. Im einfachsten Fall wird für jedes Pigment ein spezifischer Satz optisch opaker Eichtafeln präpariert und der Reflexionsfaktor oder der Strahldichtefaktor bei verschiedenen Beleuchtungs- und Beobachtungsgeometrien im interessierenden Spektralbereich mit einem Goniospektralphotometer vermessen. Die Materialparameter werden dann durch Anpassung der Strahlungstransportgleichung im Sinne der $L_2$-Norm an diese experimentellen Daten ermittelt.

Zur meßtechnischen Erfassung der Reflexionsflächen kann ein stationäres oder portables Goniospektralphotometer mit symmetrischer oder asymmetrischer Meßgeometrie eingesetzt werden. Der abzudeckende Bereich des Beobachtungswinkels richtet sich nach der jeweils verwendeten Näherung für die Strahlungstransportgleichung. Es können sowohl Geräte mit Beleuchtungs- als auch mit Beobachtungsmodulation verwendet werden (siehe Abb. (1)). Bei symmetrischer Meßgeometrie wird senkrecht zur Probenoberfläche beleuchtet (beobachtet) und bei verschiedenen Polarwinkeln θ (0°<θ<90°) beobachtet (beleuchtet). Die Apertur der Beleuchtungs- und Beobachtungsoptik sollte dabei nicht zu groß gewählt werden. Alternativ dazu kann bei Verwendung einer asymmetrischen Meßgeometrie beispielsweise unter einem Polarwinkel von 45° beleuchtet (beobachtet) werden und für die Beobachtung mehrere Winkel ε aus dem Bereich 0°<ε<90° selektiert werden, wobei ε als Differenzwinkel zum Glanzwinkel zu verstehen ist (siehe Abb. (1)).

Zur Ermittlung der koloristischen Wirkungsmatrix werden die Mengen der Rezeptkomponenten (N Pigmente) für ein vorgegebenes Rezept um ihre Sollkonzentration geringfügig variiert und die zugehörige koloristische Wirkung im Reflexionsraum oder im CIELAB-Farbraum winkelabhängig (M Winkel) mittels der optischen Materialparameter berechnet. D.h. die Auswirkungen der Konzentrationsänderungen von Rezeptbestandteilen, deren Materialparameter bekannt sind, können als Auswirkungen im Farbraum oder Reflexionsraum berechnet werden.

Das erfindungsgemäße Korrekturverfahren beruht darauf, eine die Koloristik eines Farbrezeptes beschreibende Funktion um den Sollpunkt herum bis zur ersten Ordnung in einer Taylorreihe zu entwickeln, und diese Informationen dazu zu verwenden, ein Referenzrezept auf ein vom Sollpunkt abweichendes Probenrezept hintönen zu können. Als Funktionen bieten sich hier die gemessenen Reflexionswerte oder daraus abgeleitete farbmetrische Maßzahlen wie beispielsweise das Tripel der Farbkoordinaten im Normvalenzsystem oder im CIELAB-Farbraum.

Nach dem 3. Graßmann'schen Gesetz bestehen zwischen den Farben überall stetige Übergänge. Folglich kann eine Abmischungsfunktion im Farbraum oder Reflexionsraum stets in einer Taylorreihe entwickelt werden. Diese Abmischungsfunktion f ist allgemein eine Vektorfunktion, deren Reihenentwicklung in Komponentenschreibweise durch

$$f_1^{(k)}(c) \equiv f_1^{(k)}(c_o) + \sum_{i=1}^{N} \Delta c_i \frac{\partial f_1^{(k)}(c_o)}{\partial c_i} + \frac{1}{2} \sum_{l=1}^{N} \sum_{m=1}^{N} \Delta c_l \Delta c_m \frac{\partial^2 f_1^{(k)}(c_o)}{\partial c_l \partial c_m} \div \cdots$$

$$f_2^{(k)}(c) \equiv f_2^{(k)}(c_o) + \sum_{i=1}^{N} \Delta c_i \frac{\partial f_2^{(k)}(c_o)}{\partial c_i} + \frac{1}{2} \sum_{l=1}^{N} \sum_{m=1}^{N} \Delta c_l \Delta c_m \frac{\partial^2 f_2^{(k)}(c_o)}{\partial c_l \partial c_m} \div \cdots$$

$$\vdots$$

$$f_M^{(k)}(c) \equiv f_M^{(k)}(c_o) + \sum_{i=1}^{N} \Delta c_i \frac{\partial f_M^{(k)}(c_o)}{\partial c_i} + \frac{1}{2} \sum_{l=1}^{N} \sum_{m=1}^{N} \Delta c_l \Delta c_m \frac{\partial^2 f_M^{(k)}(c_o)}{\partial c_l \partial c_m} \div \cdots$$

dargestellt werden kann. Der hochgestellte Index (k) kennzeichnet die jeweilige Meßgeometrie (maximal K Winkel) und c bzw. $c_o$ N-komponentige Konzentrationsvektoren eines Rezeptes. Die M Komponenten der Abmischungsfunktion werden für den Fall der Verwendung farbmetrischer Größen durch das Funktionstripel

$$f = \begin{pmatrix} L*(c) \\ a*(c) \\ b*(c) \end{pmatrix}$$

gebildet (M=3). Das obige Stetigkeitsargument für Farbmischungen kann auch auf die Reflexionsindikatrix direkt angewendet werden, da sie in das Funktional der Normfarbwerte eingeht. Wird daher für die Korrektur das gemessene Reflexionsspektrum verwendet, ist der Vektor der Abmischungsfunktion durch

$$f = \begin{pmatrix} R(\lambda_1, c) \\ R(\lambda_2, c) \\ \vdots \\ R(\lambda_M, c) \end{pmatrix}$$

gegeben. In vektorieller Darstellung können diese Gleichungen bei Berücksichtigung aller Terme bis zur ersten Ordnung durch die Beziehung

$$\delta f^{(k)} = f^{(k)}(c) - f^{(k)}(c_o) \equiv W^{(k)} \Delta c$$

ausgedrückt werden, in der

$$W^{(k)} = \begin{pmatrix} \dfrac{\partial f_1^{(k)}(c_o)}{\partial c_1} & \dfrac{\partial f_1^{(k)}(c_o)}{\partial c_2} & \dfrac{\partial f_1^{(k)}(c_o)}{\partial c_3} & \cdots & \cdots & \dfrac{\partial f_1^{(k)}(c_o)}{\partial c_N} \\ \dfrac{\partial f_2^{(k)}(c_o)}{\partial c_1} & \dfrac{\partial f_2^{(k)}(c_o)}{\partial c_2} & \dfrac{\partial f_2^{(k)}(c_o)}{\partial c_3} & \cdots & \cdots & \dfrac{\partial f_2^{(k)}(c_o)}{\partial c_N} \\ \vdots & \vdots & & \ddots & & \vdots \\ \dfrac{\partial f_M^{(k)}(c_o)}{\partial c_1} & \dfrac{\partial f_M^{(k)}(c_o)}{\partial c_2} & \dfrac{\partial f_M^{(k)}(c_o)}{\partial c_3} & \cdots & \cdots & \dfrac{\partial f_M^{(k)}(c_o)}{\partial c_N} \end{pmatrix}$$

die sogenannte Wirkungsmatrix repräsentiert und

$$\Delta c = \begin{pmatrix} \Delta c_1 \\ \Delta c_2 \\ \vdots \\ \Delta c_N \end{pmatrix}$$

den Vektor der Konzentrationsauslenkungen um den Sollpunkt $c_o$. Sie kann mit Hilfe der bekannten optischen Materialparameter eines Mischlacksystems für jedes vorgegebene Rezept aus der Lösung für die Strahlungstransportgleichung rechnerisch erzeugt werden. Zu diesem Zweck werden die Mengen der Rezeptkomponenten (N Pigment) um ihre Sollkonzentration geringfügig variiert, die zugehörige koloristische Wirkung im Reflexionsraum oder im Farbraum winkelabhängig (M Winkel) bestimmt und die erhaltenen Informationen in der Datenbank dem entsprechenden Rezept zugehörig gespeichert.

Der Informationsgehalt der Wirkungsmatrix kann nun sofort oder zu jedem beliebigen späteren Zeitpunkt dazu benutzt werden, ein Referenzrezept auf einen vom Referenzpunkt abweichenden Probenpunkt hinzutönen. Dieser Probenpunkt darf allerdings nur so weit vom Referenzpunkt entfernt sein, daß der Gültigkeitsbereich der verwendeten Näherung nicht überschritten und Korrelationen der Tönkomponenten untereinander vernachlässigt werden können. Im Sinne der Rezeptkorrektur beschreibt der Vektor $f^{(k)}(c_o)$ die Koloristik des Original- oder Referenzrezeptes für die Meßgeometrie k, während $f^{(k)}(c)$ beispielsweise das vermessene Karosserieteil oder den vermessenen flüssigen Lack (Sollrezept) repräsentiert. Durch Modifikation des Pigmentkonzentrationsvektors c soll die Differenz $\delta f^{(k)}$ zwischen Soll- und Referenzfarbton minimalisiert werden. Zu diesem Zweck muß das Minimum der Fehlerquadratfunktion

$$\phi = \sum_{k=1}^{K} p_k \sum_{i=1}^{M} \left\{ \delta f_i^{(k)} - \sum_{j=1}^{N} \Delta c_j \frac{\partial f_i^{(k)}(c_0)}{\partial c_j} \right\}^2 = min$$

unter der Randbedingung ermittelt werden, daß die Zugabewerte $c_i$ immer positiv sind. Zudem kann mit dem Faktor $p_k$ eine winkelabhängige Wichtung vorgenommen werden. Diese berechneten Zugabemengen werden dem Referenzrezept aufgeschlagen, das anschließend wieder auf 100 % umgerechnet wird.

Es steht somit ein korrigiertes Farbrezept zur Verfügung.

So werden im Vorfeld, d.h. ohne den eigentlichen Lackiervorgang oder Tönschritt in der Lackfertigung zu tangieren, die Wirkungsmatrizen für den gesamten Rezeptbestand einer Farbrezeptdatenbank rechnerisch ermittelt und die erhaltenen Ergebnisse in der Farbrezeptdatenbank gespeichert. Der Lackierer bzw. in der Produktion Tätige erhält daher vor Ort am Rechner sehr schnell die nötigen Informationen für die Rezeptkorrektur.

An Hand des korrigierten Rezeptes erfolgt anschließend die Erstellung eines Referenzmusters. Z.B. wird ein nach dem korrigierten Farbrezept erstellter Lack beispielsweise auf ein Referenzblech appliziert und mit dem zu reparierenden Karosserieteil visuell oder meßtechnisch verglichen. Oder ein nach dem korrigierten Rezept erstellter Lack wird als Naßmuster ausgemessen und meßtechnisch mit dem Referenznaßlack verglichen. Bei tolerierbaren Restfarbdifferenzen kann das korrigierte Rezept verwendet werden. Ist die Anpassung des Farbtones noch nicht akzeptabel bzw. stimmen die gemessenen Reflexionswerte noch nicht hinreichend überein, können ein oder mehrere der vorstehend beschriebenen Korrekturschritte angeschlossen werden.

Mit dem erfindungsgemäßen Korrekturverfahren ist es möglich, z.B. in einer Lackierwerkstatt oder in der Lackproduktion, den zeitintensiven Tönaufwand zu minimieren und in relativ kurzer Zeit einer Farbvorlage, beispielsweise einem Karosserieteil oder einem in der Produktion zu fertigenden Farbton, gut angepaßte Farbtöne zu erstellen. Dabei kann der rechenintensive Schritt der Farbrezeptberechnung, insbesondere für Effektfarbtöne, vor Ort, d.h. beispielsweise in der Lackierwerkstatt oder in der Lackfertigung umgegangen werden. Der rechenintensive Teil der Erstellung der Wirkungsmatrix für vorgegebene Rezepte wird bereits im Vorfeld erledigt. In der Lackierwerkstatt oder Lackfertigung fällt nur der geringfügige numerische Aufwand zur Rezeptkorrektur an.

Ein weiterer Vorteil des erfindungsgemäßen Korrekturverfahrens besteht darin, daß es für beliebige Pigmentarten (z.B. plättchenförmige Absorptionspigmente, Mikrotitandioxid, Metallicpigmente, Interferenzpigmente, flüssigkristalline Pigmente, holographische Pigmente) angewendet werden kann. Gerade zur Korrektur von Effektpigmentrezepten ist im Vergleich zu Unipigmentrezepten bisher ein immenser rechentechnischer und zeitlicher Aufwand erforderlich. Die Verwendung der umfassenden optischen Materialparameter der Pigmente, die mit Hilfe der Strahlungstransportgleichung aus einer Eichstaffel ermittelt werden, ermöglicht bei dem erfindungsgemäßen Korrekturverfahren bei Effektfarbtönen die exakte Berücksichtigung der ausgeprägten Winkelabhängigkeit im Reflexionsfaktor.

Die Erfindung wird im folgenden anhand der Zeichnung und der Beispiele näher erläutert.

Die Abbildungen zeigen:

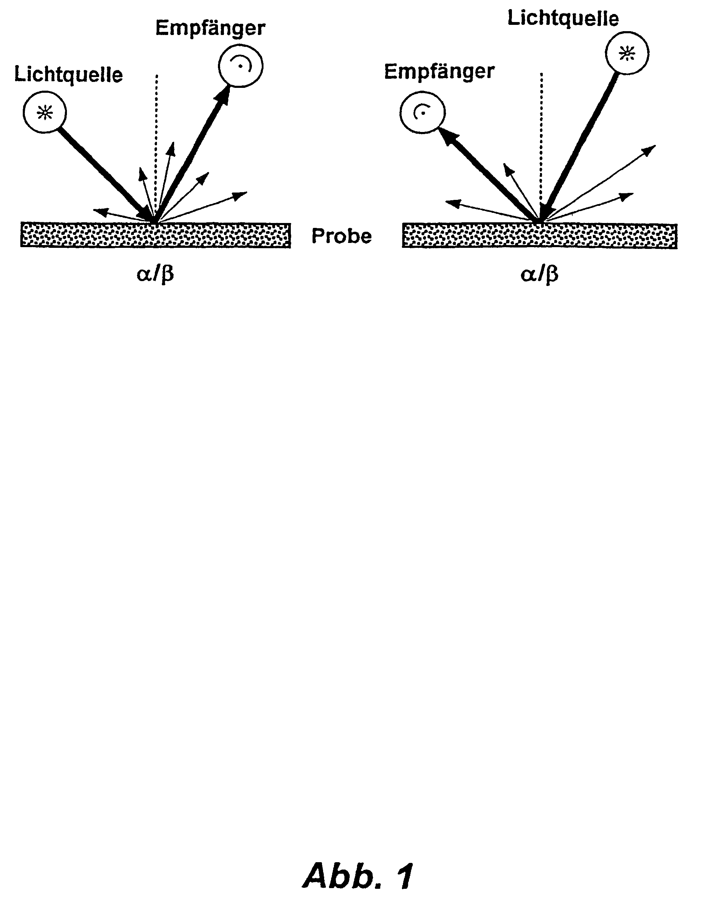

Abb. 1: Geometrische Bedingungen für die instrumentelle Charakterisierung der Reflexionseigenschaften von Oberflächenbeschichtungen. Es können empfänger- (links) und beleuchtungsmodulierte Meßanordnungen (rechts) oder eine Kombination beider eingesetzt werden.

Abb. 2: Reflexionsfaktor eines gelben Effektfarbtons als Funktion der Wellenlänge und des Winkels bei konstantem Einstrahlungswinkel (empfängermodulierte Meßgeometrie).

Abb. 3: Winkelvariation der Komponenten des Farbvektors (L*, a*, b*) im CIELAB-Farbraum für Referenzrezept, Sollrezept und korrigiertem Sollrezept für das in Abb. 2 gezeigte Beispiel der Reflektionsindikatrix eines gelben Effektfarbtons.

Abb. 4: Reflexionsfaktor eines grünen Effektfarbtons als Funktion der Wellenlänge und des Winkels bei konstantem Einstrahlungswinkel (empfängermodulierte Meßgeometrie).

Abb. 5: Winkelvariation der Komponenten des Farbvektors (L*, a*, b*) im CIELAB-Farbraum für Referenzrezept, Sollrezept und korrigiertem Sollrezept für das in Abb. 4 gezeigte Beispiel der Reflexionsindikatrix eines grünen Effektfarbtons.

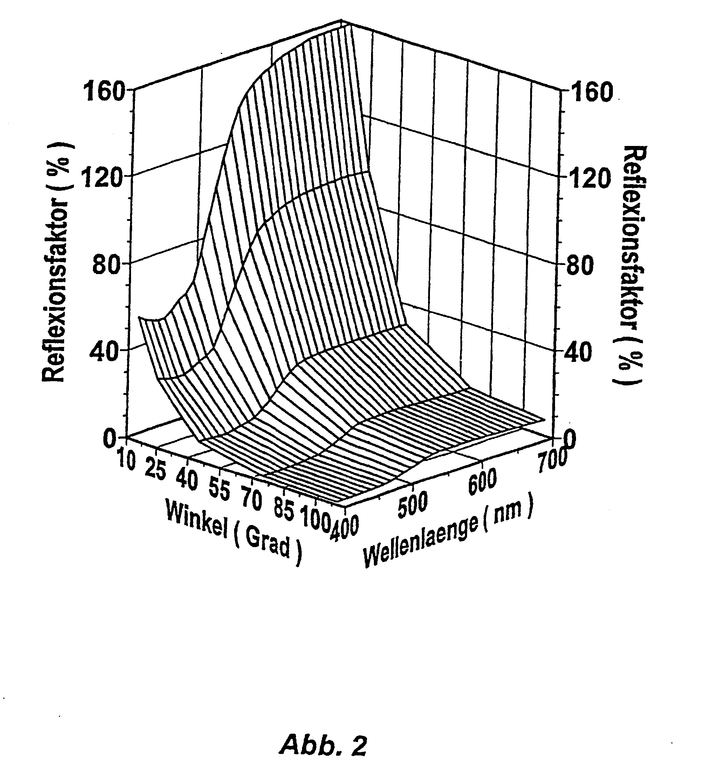

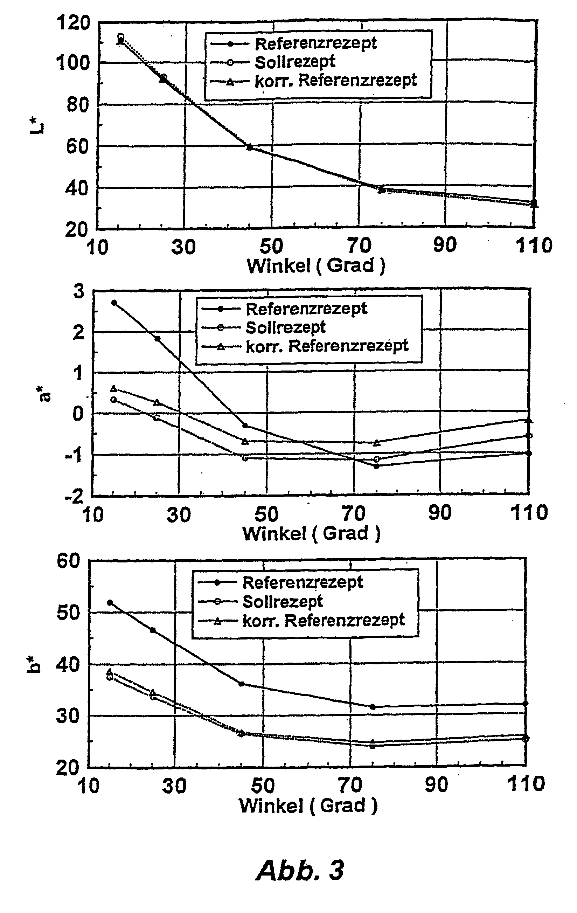

Tab. I: Zusammenstellung der Daten (Komponenten mit zugehörigen Konzentrationen und farbmetrische Maßzahlen) für das in den Abbn. 2 und 3 gezeigte Beispiel der Rezeptkorrektur eines gelben Effektfarbtons.

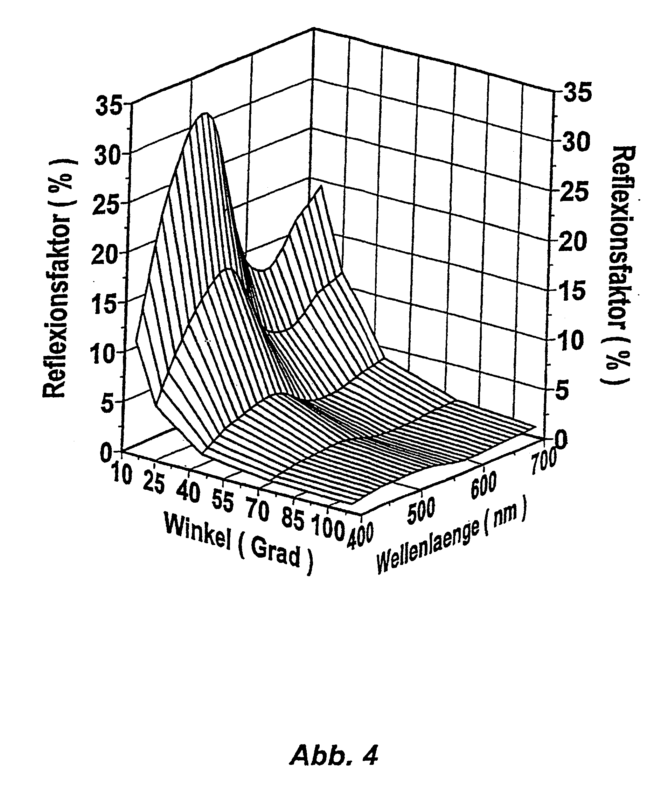

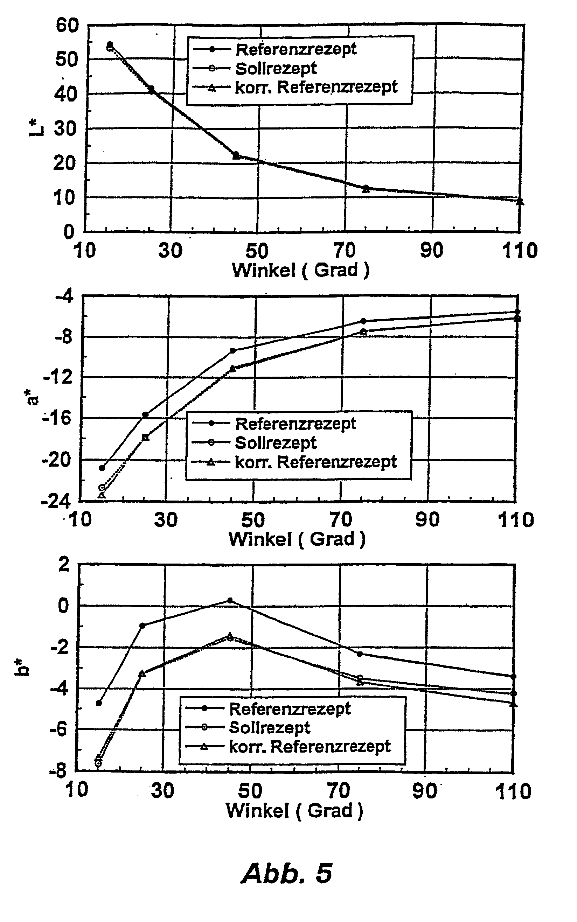

Tab. II: Zusammenstellung der Daten (Komponenten mit zugehörigen Konzentrationen und farbmetrische Maßzahlen) für das in den Abbn. 4 und 5 gezeigte Beispiel der Rezeptkorrektur eines grünen Effektfarbtons.

Zur Demonstration der Leistungsfähigkeit des Korrekturverfahrens werden exemplarisch zwei Beispiele aktueller Messungen an realen Proben mit unterschiedlich großen spezifischen Farbdifferenzen zwischen Referenzrezept und Sollrezept (Karosserieteil) präsentiert. Die zusammengestellten Daten sind typisch für die Praxis der Reparatur, enthalten die gleichen Pigmente, jedoch in unterschiedlichen Mengenverhältnissen. Für ein Rezept (Referenzrezept) wurde mit Hilfe der optischen Eichdaten die Wirkungsmatrix rechnerisch ermittelt. Als Funktionen wurden wegen der besseren Übersicht farbmetrische Maßzahlen $(L^*(\theta), a^*(\theta), b^*(\theta))$ herangezogen. Die Wirkungsmatrix für das Referenzrezept und die gemessenen spezifischen Farbdifferenzen $(\Delta L^*(\theta), \Delta a^*(\theta), \Delta b^*(\theta))$ zwischen Referenzrezept und Sollrezept wurden dazu benutzt, die für das Referenzrezept erforderlichen Konzentrationsänderungen zu berechnen, um das Referenzrezept zum Sollrezept hinzutönen.

Als Lacksystem wurde ein konventionelles Zweischichtsystem (Basislack-Klarlack-Aufbau) verwendet, für dessen Mischlacke alle über eine Eichstaffel experimentell ermittelten und für die Korrektur erforderlichen optischen Materialparameter der Strahlungstransportgleichung vorlagen. Alle Reflexionsflächen (Eichstaffel und Beispiele) wurden mit einem portablen X-Rite MA68 Goniospektralphotometer durchgeführt, das die Proben unter einem Winkel von 45° beleuchtet und unter den Winkel 15°, 25°, 45°, 75° und 110° die reflektierte Strahlung beobachtet. Der 110°-Winkel kann allerdings nur für die Farbton-Zuordnung und nicht für das Korrekturverfahren genutzt werden. Der Reflexionsfaktor eines Farbtons wurde im Spektralbereich 400 nm$\leq\lambda\leq$700 nm in Abständen von 20 nm experimentell vermessen und auf 10 nm Stützstellenabstand interpoliert. Aus den gemessenen winkelabhängigen Reflexionsspektren wurden die Komponenten des zugehörigen Ortsvektors $((\Delta L^*(\theta), \Delta a^*(\theta), \Delta b^*(\theta))$ im CIELAB-Farbraum berechnet.

## Beispiel 1

Im ersten Beispiel, bei dem die spezifischen Farbdifferenzen zwischen Referenzrezept und Sollrezept sehr groß sind, ist als effektgebende Komponente ein konventionelles Aluminium-Pigment in Kombination mit vier Buntkomponenten (handelsübliche Absorptionspigmente) eingesetzt worden, die bei den vorgegebenen Mischungsverhältnissen zu einem gelben Farbton führen. Darüber hinaus enthält das Rezept ein Mattierungsmittel, das zwar selbst zur Farbgebung nicht direkt beiträgt, aber durch Störung der Ausrichtung der Al-Pigmente indirekt Einfluß auf den Winkelgang der Reflexionsfläche nimmt. Das dem Sollrezept zugeordnete Referenzrezept soll zum Sollrezept hingetönt werden, wobei die Komponenten durch das Referenzrezept fest vorgegeben sind. Diesem Referenzrezept ist eine Wirkungsmatrix zugeordnet, deren Informationsgehalt für den eigentlichen Korrekturschritt genutzt wird. Im Reparaturlackbereich entspricht das Sollrezept einem zu reparierenden Karosserieteil, während im Bereich der Produktion das Sollrezept einem zu erreichenden Standard entspricht, auf den ein Mischer mit dem angesetzten Rezept hingetönt werden soll. Alle Komponenten des Referenzrezeptes müssen mehr oder weniger stark geändert werden, um den Sollfarbton nachstellen zu können. Alle wesentlichen Ergebnisse des Korrekturvorgangs wie die aktuellen Rezeptbestandteile mit ihren Konzentrationen (Referenz-, Soll- und korrigiertes Rezept), die (experimentellen) farbmetrischen Maßzahlen des Referenzrezeptes und die (experimentellen) spezifischen Ausgangsfarbdifferenzen zwischen Soll- und Istrezept sind in Tabelle 1 zusammengefaßt worden. Wie diesen Daten zu entnehmen ist, werden nicht nur die richtigen Komponenten modifiziert, sondern Richtung und Größenordnung der Korrektur für das Referenzrezept stimmen ausgezeichnet mit den Erwartungswerten überein. Die experimentellen spezifischen Farbmaßzahlen von Referenz-, Soll- und korrigiertem Rezept zeigt Abb. 3. Hier wird auch anschaulich klar, daß der Korrekturschritt die spezifischen Ausgangsfarbdifferenzen erheblich verkleinert hat. Der erste Korrekturschritt führt das Referenzrezept so nahe an das Sollrezept heran, daß die verbleibende Restfarbdifferenz bei der Reparatur von Karosserieteilen durch Anpassung der Applikationsparameter problemlos ausgeglichen werden kann.

## Beispiel 2

Im Vergleich zum ersten Beispiel sind in dem zweiten Beispiel eines grünen Effektfarbtones die spezifischen Farbdifferenzen zwischen Referenz- und Sollrezept deutlich geringer. Als Effektgeber ist jedoch hier eine Mischung zweier grüner Interferenzpigmente auf Glimmerbasis mit unterschiedlicher Teilchengrößenverteilung und eines $Fe_2O_3$ beschichteten Al-Pigmentes verwendet worden. Zudem enthält das Rezept drei weitere Buntpigmente und ein Mattierungsmittel. Wie im ersten Beispiel werden wieder die richtigen Komponenten des Istrezeptes korrigiert, wobei Richtung und Größenordnung in sehr guter Übereinstimmung mit den Erwartungswerten sind. Alle wesentlichen Ergebnisse des Korrekturvorgangs wie die aktuell eingesetzten Mischlacke mit ihren Konzentrationen, sowie die experimentellen farbmetrischen Maßzahlen sind Tab. II zu entnehmen. Die experimentellen spezifischen Farbmaßzahlen sind darüber hinaus in Abb. 5 dargestellt. Durch die Korrektur des Istrezeptes, das mit einem mittleren Farbabstand von <$\Delta$E>-2.4 zum Sollrezept unbefriedigend für eine Spot-Reparatur ist, wird der mittlere Farbabstand auf <$\Delta$E>-0.5

reduziert, der durch die Applikationstechnik weiter minimiert werden kann. Auch dieses Korrekturbeispiel ist für die Spot-Reparatur geeignet.

Tabelle Ia:

| Referenzrezept | | | | | Sollrezept Differenzen zum Referenzrezept | | | | |
|---|---|---|---|---|---|---|---|---|---|
| Pigment | c (%) | Winkel (Grad) | L* | a* | b* | c (%) | ΔL* | Δa* | Δb* | ΔE_ab* |
| grobes Al | 78.18 | | | | | 83.44 | | | | |
| Gelb 1 | 11.67 | 15 | 111.11 | 2.72 | 51.89 | 7.36 | 2.01 | -2.38 | -14.31 | 14.65 |
| Rot | 0.58 | 25 | 91.50 | 1.83 | 46.35 | 0.98 | 1.49 | -1.94 | -12.84 | 13.07 |
| Ruß | 0.82 | 45 | 58.97 | -0.30 | 36.20 | 1.47 | 0.33 | -0.78 | -9.73 | 9.77 |
| Gelb 2 | 5.83 | 75 | 38.60 | -1.31 | 31.51 | 3.68 | -1.03 | 0.16 | -7.50 | 7.57 |
| Effektzusatz | 2.92 | 110 | 32.35 | -1.02 | 31.84 | 3.07 | -1.59 | 0.43 | -6.86 | 7.05 |

Tabelle Ib:

| Sollrezept | | | | | korrigiertes Referenzrezept Differenzen zum Sollrezept | | | | |
|---|---|---|---|---|---|---|---|---|---|
| Pigment | c (%) | Winkel (Grad) | L* | a* | b* | c (%) | ΔL* | Δa* | Δb* | ΔE_ab* |
| grobes Al | 83.44 | | | | | 83.10 | | | | |
| Gelb 1 | 7.36 | 15 | 113.12 | 0.34 | 37.58 | 8.10 | 2.46 | -0.28 | -1.08 | 2.70 |
| Rot | 0.98 | 25 | 92.99 | -0.11 | 33.72 | 1.10 | 0.63 | -0.39 | -0.91 | 1.17 |
| Ruß | 1.47 | 45 | 59.30 | -1.08 | 26.47 | 1.40 | -0.45 | -0.41 | -0.32 | 0.64 |
| Gelb 2 | 3.68 | 75 | 37.57 | -1.15 | 24.01 | 4.00 | -0.39 | -0.41 | -0.61 | 0.83 |
| Effektzusatz | 3.07 | 110 | 30.76 | -0.59 | 24.98 | 2.20. | -0.33 | -0.39 | -0.82 | 0.96 |

EP 0 828 144 B1

Tabelle IIa:

| Referenzrezept | | | | | Sollrezept Differenzen zum Referenzrezept | | | | |
|---|---|---|---|---|---|---|---|---|---|
| Pigment | c (%) | Winkel (Grad) | $L^*$ | $a^*$ | $b^*$ | c (%) | $\Delta L^*$ | $\Delta a^*$ | $\Delta b^*$ | $\Delta E_{ab}^*$ |
| Interferenzgrün 1 | 7.69 | | | | | 7.55 | | | | |
| Interferenzgrün 2 | 37.95 | 15 | 54.29 | -20.78 | -4.72 | 38.27 | -1.13 | -1.91 | -2.94 | 3.68 |
| $Fe_2O_3$-belegtes Al | 9.23 | 25 | 41.28 | -15.67 | -0.92 | 8.06 | -0.81 | -2.14 | -2.36 | 3.29 |
| Blau | 15.38 | 45 | 22.75 | -9.32 | 0.30 | 17.12 | -0.22 | -1.87 | -1.21 | 2.24 |
| Ruß | 14.36 | 75 | 12.69 | -6.52 | -2.31 | 12.89 | -0.22 | -1.01 | -1.18 | 1.57 |
| Gelb | 13.33 | 110 | 9.09 | -5.54 | -3.38 | 13.09 | -0.15 | -0.60 | -0.84 | 1.04 |
| Effektzusatz | 2.06 | | | | | 3.02 | | | | |

Tabelle IIb:

| Sollrezept | | | | | korrigiertes Referenzrezept Differenzen zum Sollrezept | | | | |
|---|---|---|---|---|---|---|---|---|---|
| Pigment | c (%) | Winkel (Grad) | $L^*$ | $a^*$ | $b^*$ | c (%) | $\Delta L^*$ | $\Delta a^*$ | $\Delta b^*$ | $\Delta E_{ab}^*$ |
| Interferenzgrün 1 | 7.55 | | | | | 6.87 | | | | |
| Interferenzgrün 2 | 38.27 | 15 | 53.16 | -22.69 | -7.66 | 37.98 | -1.19 | 0.68 | -0.31 | 1.41 |
| $Fe_2O_3$-belegtes Al | 8.06 | 25 | 40.47 | -17.81 | -3.28 | 8.24 | -0.01 | -0.01 | -0.06 | 0.06 |
| Blau | 17.12 | 45 | 22.53 | -11.19 | -1.51 | 17.54 | 0.26 | -0.17 | 0.14 | 0.34 |
| Ruß | 12.89 | 75 | 12.47 | -7.53 | -3.49 | 13.11 | 0.14 | -0.04 | 0.17 | 0.22 |
| Gelb | 13.09 | 110 | 8.94 | -6.14 | -4.22 | 13.24 | 0.04 | 0.02 | 0.45 | 0.45 |
| Effektzusatz | 3.02 | | | | | 3.02 | | | | |

EP 0 828 144 B1

**Patentansprüche**

1.  Verfahren zur Anpassung einer Farbrezeptur an eine Farbtonvorlage auf dem Gebiet der farb- und/oder effektgebenden Oberflächenbeschichtung,
    bei dem

    i) in einem ersten Schritt die Reflexionsfläche eines nachzustellenden Farbtons einer gefärbten Oberflächenbeschichtung mit einem Goniospektralphotometer meßtechnisch über den sichtbaren Spektralbereich unter Variation des Meßwinkels erfaßt wird,

    ii) aus den gemessenen Reflexionsfaktoren oder Strahldichtefaktoren die zugehörigen Normfarbwerte und/oder die daraus abgeleiteten Vektoren im CIELAB-Farbraum berechnet werden,

    iii) anschließend aus einer Rezeptdatenbank an Hand der Reflexionsspektren oder der daraus abgeleiteten farbmetrischen Maßzahlen diejenigen Rezepte und/oder Farbtöne identifiziert werden, welche in ihren Reflexionseigenschaften oder daraus abgeleiteten Eigenschaften der vermessenen Farbtonvorlage am ähnlichsten sind,

    iv) mit Hilfe einer rechnerisch erstellten Wirkungsmatrix die meßtechnisch erfaßte winkelabhängige Farbdifferenz zwischen dem Sollfarbton, d. h. dem nachzustellenden Farbton, und dem Istfarbton, d. h. dem Farbton entsprechend dem nächstliegenden Rezept aus der Rezeptdatenbank, mittels eines Rechenalgorithmus zur Funktionsminimalisierung unter Berücksichtigung von Nebenbedingungen im Sinne der $L_2$-Norm minimiert und ein korrigiertes Rezept erstellt wird, wobei die Wirkungsmatrix erstellt wird, indem

    a) mittels einer Eichstaffel die Reflexionsflächen für jedes den Rezepten aus der Rezeptdatenbank zugrundeliegende Pigment bei mehreren Winkeln im geforderten Spektralbereich experimentell mit einem Goniospektralphotometer ermittelt werden,

    b) die optischen Materialparameter für jedes den Rezepten aus der Rezeptdatenbank zugrundeliegende Pigment durch Anpassung der Strahlungstransportgleichung an die experimentell ermittelten Reflexionsflächen bestimmt werden und

    c) die koloristische Wirkungsmatrix, welche die koloristische Wirkung im Reflexionsraum oder Farbraum winkelabhängig bei variierten Pigmentkonzentrationen beschreibt, für den gesamten Rezeptbestand der Rezeptdatenbank mit Hilfe der Strahlungstransportgleichung rechnerisch ermittelt und in der Rezeptdatenbank gespeichert wird.

2.  Verfahren nach Anspruch 1, **dadurch gekennzeichnet, daß** entsprechend dem korrigierten Rezept als Referenzmuster ein Lack und/oder eine Oberflächenbeschichtung hergestellt werden und das Verfahren nach Anspruch 1 wiederholt wird unter Verwendung des Referenzmusters als Istfarbton.

3.  Verfahren nach Anspruch 2, **dadurch gekennzeichnet, daß** das Verfahren mehrfach wiederholt wird, wobei jeweils das Referenzmuster des vorhergehenden Verfahrensdurchlaufs als Istfarbton des folgenden Verfahrensdurchlaufs verwendet wird.

**Claims**

1.  Method of matching a colour formulation to a specified colour in the field of colouring and special-effect surface coating, in which

    i) in a first step, the reflective surface of a colour hue to be rematched of a coloured surface coating is analysed metrologically using a goniospectrophotometer over the visible spectral range while varying the measurement angle,

    ii) the associated standard colour values and/or the vectors derived therefrom are calculated in the CIELAB colour space from the measured reflection factors or beam density factors,

iii) those formulae and/or colour hues that are most similar in their reflective properties or properties of the measured specified colour derived therefrom are then identified from a formula database on the basis of the reflection spectra or colorimetric values derived therefrom,

iv) with the aid of a computer-created effect matrix, the angle-dependent colour difference analysed metrologically between the required colour hue, i.e. the colour hue to be rematched, and the actual colour hue, i.e. the colour hue corresponding to the nearest formula from the formula database, is minimized by means of a function-minimalization computer algorithm taking into account constraints in the context of the $L_2$ standard and a corrected formula is created, the effect matrix being created by

   a) determining experimentally, by means of a calibrated graded scale, the reflective surfaces for every pigment serving as a base for the formulae from the formulae database at a plurality of angles in the required spectral range using a goniospectrophotometer,

   b) by determining the optical material parameters for every pigment serving as a base for the formulae from the formula database by matching the radiation transfer equation to the experimentally determined reflective surfaces, and

   c) by determining the coloristic effect matrix, which describes the coloristic effect in the reflection space or colour space in an angle-dependent manner with varied pigment concentrations, for the entire formulae inventory of the formula database with the aid of the radiation transfer equation and storing it in the formula database.

**2.** Method according to Claim 1, **characterized in that**, in accordance with the corrected formula, a lacquer and/or a surface coating are/is prepared as a reference sample and the method according to Claim 1 is repeated using the reference sample as actual colour hue.

**3.** Method according to Claim 2, **characterized in that** the method is repeated several times, the reference sample of the preceding method run being used in each case as actual colour hue of the subsequent method run.

**Revendications**

**1.** Procédé d'adaptation d'une formule de couleur à un modèle de nuance de couleur dans le domaine du revêtement de surface coloré et/ou avec des effets, dans lequel :

   i) dans une première étape, la surface de réflexion d'une nuance de couleur à ajuster d'un revêtement de surface coloré est mesurée avec un goniospectrophotomètre dans le spectre visible, en faisant varier l'angle de mesure ;
   ii) à partir des facteurs de réflexion ou des facteurs d'intensité du rayonnement, les couleurs correspondantes et/ou les vecteurs qui en résultent sont calculés dans la salle de couleur CIELAB ;
   iii) ensuite, à partir d'une base de données de formules, à l'aide des spectres de réflexion ou des indices colorimétriques qui en résultent, les formules et/ou les nuances de couleur, dont les propriétés de réflexion ou les propriétés qui en découlent sont les plus similaires au modèle de nuance de couleur mesuré, sont identifiées ;
   iv) à l'aide d'une matrice de fonction établie par calcul, la différence de couleur mesurée en fonction de l'angle entre la nuance de couleur théorique, c'est à dire la nuance de couleur à ajuster, et la nuance de couleur réelle, c'est à dire la nuance de couleur correspondant à la formule la plus proche de la base de données de formules, est minimisée à l'aide d'un algorithme de calcul pour la minimalisation des fonctions en prenant en compte les conditions secondaires dans le sens de la norme La, et une formule corrigée est déterminée, la matrice de fonction étant établie :

   a) à l'aide de l'échelle de calibrage, les surfaces de réflexion pour chaque pigment à la base des formules de la base de données de formules sont déterminées expérimentalement pour plusieurs angles dans le domaine spectral nécessaire avec un goniospectrophotomètre,
   b) les paramètres optiques du matériau pour chaque pigment à la base des formules de la base de données sont déterminés par adaptation de l'équation de transport du rayonnement aux surfaces de réflexion déterminées ; et

c) la matrice de fonction colorimétrique qui décrit la fonction colorimétrique dans l'espace de réflexion ou l'espace chromatique pour des concentrations de pigments variables en fonction de l'angle, est déterminée par calcul à l'aide de l'équation de transport du rayonnement pour l'ensemble de la formule de la base de données de formules et stockée dans la base de données des formules.

2. Procédé selon la revendication 1, **caractérisé en ce qu'**en fonction de la formule corrigée en tant que modèle de formule, une peinture et/ou un revêtement de surface est fabriqué et le procédé selon la revendication 1 est répété en utilisant le modèle de référence comme nuance de couleur réelle.

3. Procédé selon la revendication 2, **caractérisé en ce que** le procédé est répété plusieurs fois, le modèle de référence du déroulement précédent du procédé étant utilisé comme nuance de couleur réelle lors du déroulement suivant du procédé.

**Abb. 1**

*Abb. 2*

*Abb. 3*

*Abb. 4*

**Abb. 5**